# EUROPÄISCHE PATENTSCHRIFT

(11) **EP 3 849 862 B1**
(45) Veröffentlichungstag und Bekanntmachung des Hinweises auf die Patenterteilung: **26.04.2023**
(21) Anmeldenummer: 19762381.2
(22) Anmeldetag: 02.09.2019
(51) Int. Cl.: F16D 127/04, F16D 127/06, B61H 13/04

(54) **BREMSZYLINDER MIT EINER VERRIEGELUNGSVORRICHTUNG ZUR MECHANISCHEN BREMSKRAFTVERRIEGELUNG**
BRAKE CYLINDER WITH A LOCKING SYSTEM FOR MECHANICALLY LOCKING THE BRAKE FORCE
CYLINDRE DE FREIN AVEC UN DISPOSITIF DE VERROUILLAGE POUR VERROUILLER MÉCHANIQUEMENT L'EFFORT DE FREINAGE

(30) Priorität: 14.09.2018 DE 102018122518
(43) Veröffentlichungstag der Anmeldung: 21.07.2021
(73) Patentinhaber: KNORR-BREMSE Systeme für Schienenfahrzeuge GmbH, 80809 München (DE)
(72) Erfinder: ELSTORPFF, Marc-Gregory, 80368 München (DE); MATHIEU, Michael, 82178 Puchheim (DE); FUDERER, Erich, 82256 Fürstenfeldbruck (DE); HECHT, Ferdinand, 85258 Weichs (DE)
(86) Internationale Anmeldenummer: PCT/EP2019/073367
(87) Internationale Veröffentlichungsnummer: WO 2020/053021

(56) Entgegenhaltungen:
- EP-A1- 2 826 684
- EP-A2- 2 695 780
- DE-A1- 2 616 851

## Beschreibung

Die Erfindung betrifft einen Bremszylinder mit einer Verriegelungsvorrichtung zur mechanischen Bremskraftverriegelung nach dem Oberbegriff des Anspruchs 1.

Um das Wegrollen von abgestellten Schienenfahrzeugen unter allen Umständen zu verhindern, muss die Feststellbremse eine entsprechend hohe Bremskraft auch ohne externe Energieversorgung sicherstellen.

Muss ein derart abgestelltes Schienenfahrzeug abgeschleppt werden, so steht oftmals keine Druckluftversorgung für dieses Fahrzeug zur Verfügung, mit welcher eine Arretierung gelöst werden kann. Für diesen Fall muss die Feststellbremse mit einer entsprechenden mechanischen Löseeinrichtung ausgestattet sein (Notlöse- oder Hilfslöseeinrichtung), durch welche die Feststellbremse von Hand, d.h. ohne Nutzung von Fremdenergie gelöst werden kann.

Das Dokument EP 2826684 B1 beschreibt ein Schienenbremssystem für Schienenfahrzeuge, bei dem die Feststellbremse durch eine Blockierung der Betriebsbremse realisiert ist. Die Arretiervorrichtung wurde dabei durch ein radial verschiebliches Sperrelement realisiert, das in ein Zahnrad eingreift. Bei der Verwendung einer Arretiervorrichtung in der o.g. Form wird es als nachteilig angesehen, dass ein Teil der möglichen Zuspannkraft durch die Spiele in der Arretiervorrichtung verlorengeht. Für den Fall, dass das Sperrelement kurz nach einer Zahnflanke in das Zahnrad einfällt, dreht sich das Zahnrad um fast eine Zahnteilung zurück, bevor es durch das Sperrelement arretiert wird.

Um das Zurückdrehen des Zahnrades und damit den Kraftverlust zu reduzieren, ist das Ziel, den Durchmesser des Zahnrades möglichst groß und die Zahnteilung möglichst gering zu gestalten. Der Zahnraddurchmesser wird aber durch den Bauraum und die Zahnteilung durch die Tragfähigkeit der Zähne begrenzt.

Daher besteht die Aufgabe der Erfindung darin, einen verbesserten Bremszylinder mit einer verbesserten Verriegelungsvorrichtung zur mechanischen Bremskraftverriegelung bereitzustellen.

Die Aufgabe wird durch einen Bremszylinder mit den Merkmalen des Anspruchs 1 gelöst.

Ein Erfindungsgedanke besteht darin, den Kraftverlust nicht nur durch die Zahnteilung, sondern durch eine Erhöhung der Anzahl der Sperrelemente n (größer 1) zu reduzieren.

Ein erfindungsgemäßer Bremszylinder mit einer Verriegelungsvorrichtung zur mechanischen Bremskraftverriegelung, insbesondere für Schienenfahrzeuge, und mit einem innerhalb eines Gehäuses axial bewegbaren Betriebsbremskolben, der durch Beaufschlagung mit einem Druckmedium bewegbar und mit einem Kolbenrohr gekoppelt ist, wobei das Kolbenrohr mit einem nicht selbsthemmenden Gewinde, das in Eingriff mit einer in dem Gehäuse drehbar gelagerten Gewindemutter steht, ausgebildet ist, wobei die Verriegelungsvorrichtung mit einer Verzahnung der Gewindemutter zusammenwirkt, ist mit einer Verriegelungsvorrichtung ausgebildet, die mindestens zwei Sperrelemente, einen Steuerkolben und einen Notlösestößel umfasst.

Mit diesem Bremszylinder mit mechanischer Bremskraftverriegelung ist es vorteilhaft möglich, dass die Betriebsbremse eingelegt und mechanisch arretiert wird. Dadurch wird die Zuspannkraft für den Parkbremsfall dauerhaft d.h. auch ohne pneumatische Druckversorgung gehalten.

Dabei ist es von Vorteil, dass die Lastspielzahl der einzelnen Zähne bzw. der Sperrelemente reduziert wird, wodurch die Bauteile kompakter ausgelegt werden können.

In besonders bevorzugter Ausführung sind die mindestens zwei Sperrklinken in Bezug auf eine Kolbenachse, zu welcher die Gewindemutter koaxial angeordnet ist, an der Verzahnung der Gewindemutter radial gegenüberliegend angeordnet. Dies ergibt einen vorteilhaft geringen Bauraum.

Weiterhin ist es in der besonders bevorzugten Ausführung vorgesehen, dass die mindestens zwei Sperrklinken gleichzeitig durch sowohl den Steuerkolben als auch durch den Notlösestößel betätigbar sind. Das reduziert die Anzahl von Bauteilen und spart Einbauraum.

In weiterer besonders bevorzugter Ausführung ist vorgesehen, dass die Verriegelungsvorrichtung aus einem Arretierungszustand, in welchem die mindestens zwei Sperrklinken durch einen Eingriff mit der Verzahnung der Gewindemutter deren Verdrehung um die Kolbenachse blockieren, wobei die mindestens zwei Sperrklinken jeweils mittels einer Feder in Eingriff mit der Verzahnung der Gewindemutter gedrückt sind, in einen Lösezustand, in welchem die Sperrklinken außer Eingriff mit der Verzahnung der Gewindemutter stehen und die Gewindemutter in ihrer Verdrehung nicht blockieren, mittels des Steuerkolbens und/oder des Notlösestößels verstellbar ist, wobei die Verriegelungsvorrichtung durch Beaufschlagen des Steuerkolbens mit Steuerdruck in den Lösezustand verstellt ist, oder wobei der Notlösestößel mittels Werkzeug oder/und manuell aus einer Ruheposition in eine Löseposition verstellt ist und die eine oder mehreren Sperrklinken betätigt, wobei die Verriegelungsvorrichtung aus dem Lösezustand in den Arretierungszustand mittels des Steuerkolbens verstellbar ist, wenn der Steuerkolben nach Beaufschlagung mit Druck anschließend wieder entlüftet wird, oder im Falle des Notlösestößels dieser aus seiner Löseposition in seine Ruheposition zurückgestellt ist. Damit wird eine vorteilhafte Steuerung und Betätigung auch für einen Notlösefall ermöglicht.

Für eine vorteilhafte platzsparende Anordnung sind die mindestens zwei Sperrklinken als Winkelhebel mit jeweils zwei Hebelarmen ausgebildet und jeweils um eine Schwenkachse verschwenkbar in dem Gehäuse angeordnet.

Hierbei sind die Schwenkachsen der mindestens zwei Sperrklinken parallel zu der Kolbenachse angeordnet, wodurch ebenfalls Einbauraum gespart werden kann.

In einer noch weiteren Ausführung stehen die mindestens zwei Sperrklinken durch die Federkraft von Federn in dem Verriegelungszustand der Verriegelungsvorrichtung in Eingriff mit der Verzahnung der Gewindemutter. Somit ist es vorteilhaft ermöglicht, dass der Verriegelungszustand mechanisch ohne zusätzliche Fremdenergie oder bei Verlust von Betätigungsenergie beibehalten werden kann.

Es ist zudem vorgesehen, dass die mindestens zwei Sperrklinken der Verriegelungsvorrichtung unabhängig voneinander bewegbar sind. Der Vorteil dabei besteht darin, dass die Sperrklinken unabhängig voneinander in Eingriff mit der Verzahnung der Gewindemutter kommen können.

Es ist vorteilhaft, wenn ein Klinkenende einer der mindestens zwei Sperrklinken in Bezug auf die Verzahnung der Gewindemutter drückend und das andere Klinkenende einer der mindestens zwei Sperrklinken in Bezug auf die Verzahnung der Gewindemutter ziehend ausgeführt ist, da auf diese Weise die Sperrklinken radial gegenüberliegend an der Verzahnung der Gewindemutter angeordnet werden können, um den geringen Einbauraum optimal zu nutzen.

In einer noch weiteren Ausführung sind die Klinkenenden der mindestens zwei Sperrklinken um eine 1/n Zahnteilung in Bezug auf die Verzahnung der Gewindemutter versetzt zueinander angeordnet, wobei n die Anzahl der Sperrelemente ist. Das ist vorteilhaft, da sich dadurch das Zahnrad bzw. die Verzahnung der Gewindemutter maximal um eine 1/n Zahnteilung zurückdrehen kann, wodurch der Kraftverlust um den Faktor 1/n reduziert wird

Eine Ausführung sieht vor, dass ein Antriebsende der ersten Sperrklinke gabelförmig mit zwei Antriebsabschnitten als Zinken und einem Abstand zwischen den Antriebsabschnitten ausgebildet ist, wobei ein plattenförmiges Antriebsende der zweiten Sperrklinke zwischen den als Zinken gebildeten Antriebsabschnitten angeordnet ist. Ein Vorteil besteht darin, dass bei dieser Ausführung sowohl der Steuerkolben als auch der Notlösestößel jeweils beide Sperrklinken gleichzeitig betätigen können.

In einer alternativen Ausführung weist die Verriegelungsvorrichtung weiterhin mindestens zwei in dem Gehäuse geführte Schieber mit jeweils einem Sperrelement mit einem Sperrkantenabschnitt und jeweils einem Steuerabschnitt mit einem Steuerflächenabschnitt und einen Betätigungsring auf, wobei der Betätigungsring um eine Kolbenachse verschwenkbar ist und einen Betätigungsabschnitt aufweist, welcher mit dem Steuerkolben und dem Notlösestößel in Kontakt steht. Auf diese Weise kann ein Einbauraum optimal genutzt werden.

Eine weitere Ausbildung der alternativen Ausführung sieht vor, dass der Betätigungsring Steuerausnehmungen aufweist, welche umlaufend in seinen Außendurchmesser eingeformt sind und mit den Steuerabschnitten der Schieber in Kontakt stehen. So kann durch eine einfache Verdrehung bzw. Verschwenkung die Verriegelungsvorrichtung aus dem Arretierungszustand in den Lösezustand und zurück verstellt werden.

Für eine vorteilhaft platzsparende Anordnung ist es vorgesehen, dass die Schieber in Nuten in dem Gehäuse verschiebbar geführt angeordnet und über Federn mit den Sperrkantenabschnitten radial gegen die Verzahnung der Gewindemutter gedrückt sind.

In einer weiteren Ausführung ist der Steuerkolben mit einem Druckmittel beaufschlagbar, und der Notlösestößel ist manuell oder/und mit einem Werkzeug verstellbar. Natürlich kann der Steuerkolben auch mit einem anderen Aktuator, z.B. elektromotorisch oder hydraulisch betätigt werden. Dies ergibt eine vorteilhaft einfache Betätigung.

Es ergeben sich die folgenden Vorteile:
- Reduzierung des Zurückstellens der Verriegelungsvorrichtung und damit des Kraftverlustes bei der Parkbremsbetätigung
- Reduzierung der Lastspielzahl der einzelnen Bauteile

Die Feststellbremse von Schienenfahrzeugen mit dem oben beschriebenen Bremszylinder und der Verriegelungsvorrichtung erfüllt die nachfolgenden Kriterien:
- Sicherung des Fahrzeugs gegen unbeabsichtigtes Wegrollen
- Dauerhafte Sicherstellung der erforderlichen Feststellkraft
- Zugweite Aktivierung / Deaktivierung von verschiedenen Führerständen des Fahrzeugs
- Manuelle Deaktivierung (Notlösen) eines Aktuators bei Verlust der Betätigungsenergie

Ausführungsbeispiele der Erfindung werden nachfolgend anhand der beigefügten Zeichnungen beschrieben.

Es zeigen:
- Figur 1-2: schematische Längsschnitte;
- Figur 3: einen schematischen Radialschnitt längs einer Schnittlinie III des Bremszylinders nach Figur 2;
- Figur 4: einen schematischen Radialschnitt längs einer Schnittlinie IV des Bremszylinders nach Figur 2;
- Figur 5: eine schematische Perspektivansicht der Verriegelungsvorrichtung des ersten Ausführungsbeispiels nach Figur 1-2; und
- Figur 6: eine schematische Ansicht einer Verriegelungsvorrichtung eines zweiten Ausführungsbeispiels des erfindungsgemäßen Bremszylinders nach Figur 1.

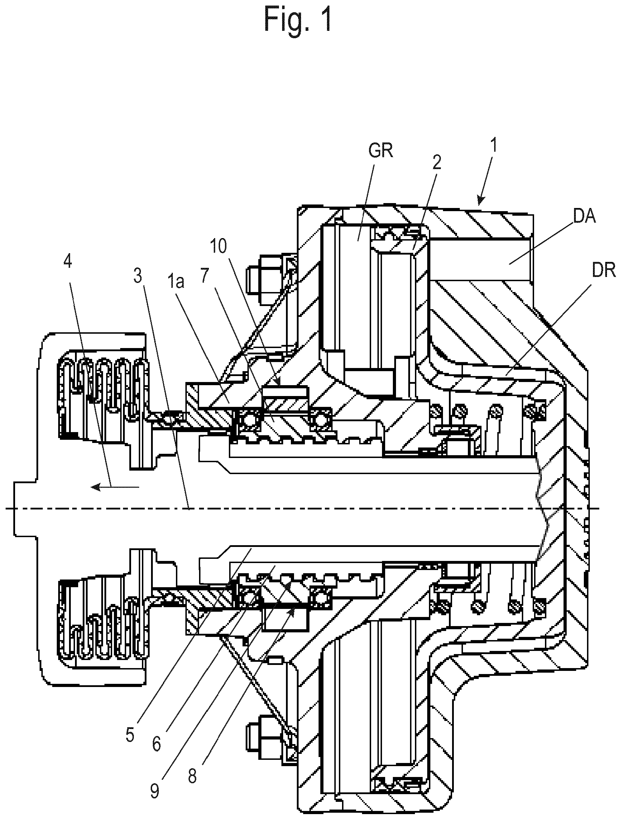

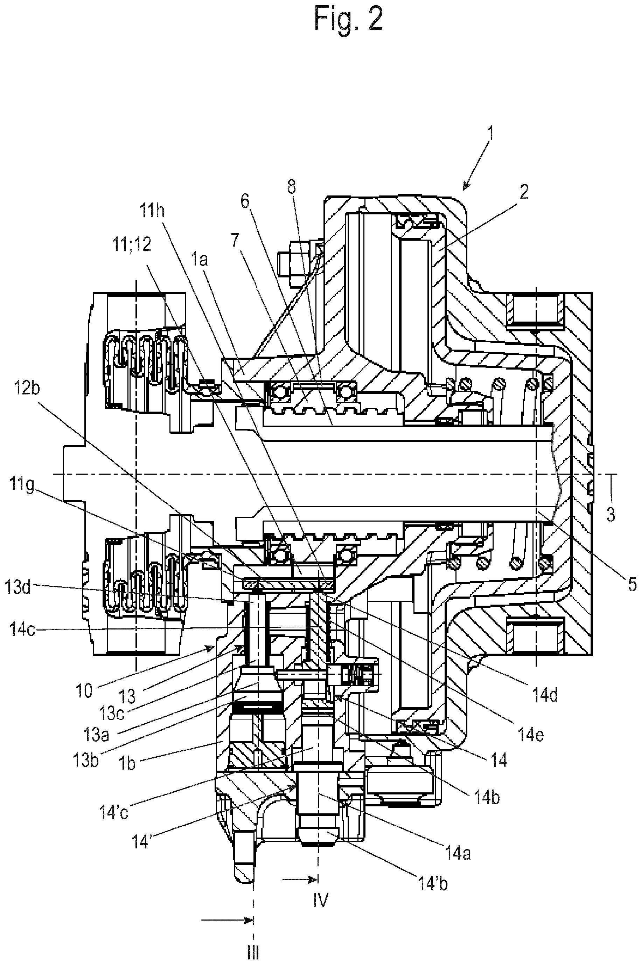

**Figur 1** zeigt einen schematischen Längsschnitt eines ersten Ausführungsbeispiels eines erfindungsgemäßen Bremszylinders 1 mit einer Verriegelungsvorrichtung 10. Die Darstellung in **Figur 2** zeigt den Bremszylinder 1 nach Figur 1 um 90° um eine Kolbenachse 3 gedreht in einem Längsschnitt.

Der Bremszylinder 1 weist die Verriegelungsvorrichtung 10 als mechanische Bremskraftverriegelung auf und ist für den Einsatz bei Schienenfahrzeugen vorgesehen.

Der allgemein bekannte Aufbau und die Funktion des Bremszylinders 1 werden hier nicht weiter im Detail beschrieben.

In einem Gehäuse 1a des Bremszylinders 1 ist ein Gehäuseinnenraum GR angeordnet, in welchem ein Betriebsbremskolben 2 längs einer Kolbenachse 3 in einer Bewegungsrichtung 4 verschiebbar angeordnet ist.

Der Betriebsbremskolben 2 trennt einen Druckraum DR von dem Gehäuseinnenraum GR des Gehäuses 1a ab. Der Druckraum DR ist mit einem Druckanschluss DA verbunden, durch welchen der Druckraum DR mit einem Druckmedium, z.B. Druckluft, und somit der Betriebsbremskolben 2 beaufschlagt werden kann.

Der Betriebsbremskolben 2 ist mit einem Ende eines Kolbenrohres 5 verbunden, welches sich durch das Gehäuse 1a längs der Kolbenachse 3 erstreckt und mit einer nicht gezeigten Kolbenstange verbunden ist. Diese Kolbenstange überträgt bei einem Bremsvorgang eine Bremskraft auf ein (hier nicht dargestelltes) Bremsgestänge eines Schienenfahrzeuges .

Das andere Ende des Kolbenrohres 5 weist einen Gewindeabschnitt 6 mit einem Außengewinde auf, der fest mit dem Kolbenrohr 5 verbunden ist. Das auf dem Kolbenrohr 5 angebrachte Gewinde 9 des Gewindeabschnitts 6 steht in Eingriff mit einem Innengewinde einer in dem Gehäuse 1a gelagerten Gewindemutter 7. Das Gewinde 9 ist nicht selbsthemmend ausgeführt. Die Gewindemutter 7 ist in dem zugehörigen Abschnitt des Gehäuses 1a drehbar um die Kolbenachse 3 gelagert und axial fixiert.

Werden der Druckraum DR des Bremszylinders 1 über den Druckanschluss DA und somit der Betriebsbremskolben 2 mit Druck beaufschlagt, bewegt sich der Betriebsbremskolben 2 zusammen mit dem Kolbenrohr 5 nach in der Bewegungsrichtung 4 (hier in der Figur 1) nach links.

Diese axiale Bewegung des Betriebsbremskolbens 2 und des Kolbenrohres 5 in Richtung der Kolbenachse 3 bewirkt aufgrund des nicht selbsthemmenden Gewindeeingriffs von dem Gewindeabschnitt 6 und der Gewindemutter 7 eine Drehung der Gewindemutter 7 um die Kolbenachse 3. Wird die Drehung der Gewindemutter 7 durch eine Arretierung behindert, wird zugleich die Axialbewegung des Betriebsbremskolbens 2 gesperrt. Eine solche Arretierung wird hier durch die Verriegelungsvorrichtung 10 gebildet, welche mit einer äußeren Verzahnung 8 der Gewindemutter 7 zusammenwirkt.

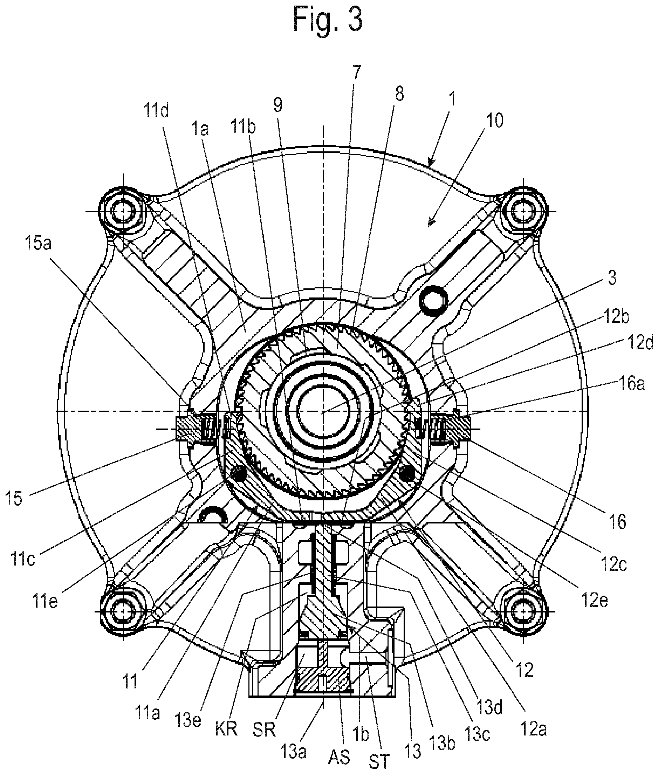

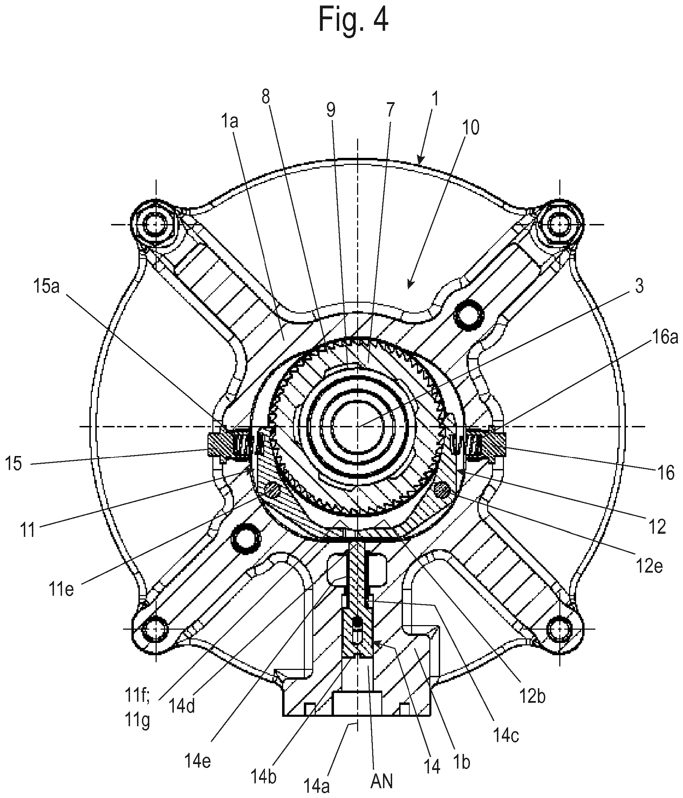

Die Verriegelungsvorrichtung 10 wird im Weiteren im Zusammenhang mit den Figuren 2, 3 und 4 erläutert. **Figur 3** zeigt einen schematischen Radialschnitt längs einer Schnittlinie III des Bremszylinders 1 nach Figur 2, und in **Figur 4** ist ein schematischer Radialschnitt längs einer Schnittlinie IV des Bremszylinders 1 nach Figur 2 dargestellt.

Die Verriegelungsvorrichtung 10 umfasst in diesem ersten Ausführungsbeispiel den Gewindeabschnitt 6 des Kolbenrohres 5, die Gewindemutter 7, eine erste Sperrklinke 11, eine zweite Sperrklinke 12, einen Steuerkolben 13 und einen Notlösestößel 14. Die Sperrklinken 11, 12 bilden hier in Bezug auf die Kolbenachse 3, zu welcher die Gewindemutter 7 koaxial angeordnet ist, radial gegenüberliegend angeordnete Arretierelemente, wirken mit der Verzahnung 8 der Gewindemutter 7 zusammen und werden durch den Steuerkolben 13 und den Notlösestößel 14 betätigt. Sowohl der Steuerkolben 13 als auch der Notlösestößel 14 betätigt dabei beide Sperrklinken 11, 12 gleichzeitig.

Mittels des Steuerkolbens 13 kann die Verriegelungsvorrichtung 10 aus einem Arretierungszustand in einen Lösezustand und zurück (bzw. umgekehrt) verstellt werden. Mittels des Notlösestößels 14 kann die Verriegelungseinrichtung 10 aus dem Arretierungszustand nur in den Lösezustand gebracht werden, umgekehrt ist dies jedoch nicht möglich. Nachdem die Verriegelungsvorrichtung 10 mit Hilfe des Notlösestößels 14 in den Lösezustand verstellt worden ist, kann die Verriegelungsvorrichtung 10 mit dem Notlösestößel 14 nicht mehr in den Arretierungszustand verstellt werden. Nur der Steuerkolben 13 kann bei Beaufschlagung mit Druck und anschließendem Entlüften die Verriegelungsvorrichtung 10 wieder in den Arretierungszustand verstellen.

In dem Arretierungszustand blockieren die Sperrklinken 11, 12 durch einen Eingriff mit der Verzahnung 8 der Gewindemutter 7 deren Verdrehung um die Kolbenachse 3, während die Sperrklinken 11, 12 in dem Lösezustand außer Eingriff mit der Verzahnung 8 der Gewindemutter 7 stehen und diese in ihrer Verdrehung nicht blockiert ist. In den Figuren 3 und 4 ist der Arretierungszustand der Verriegelungsvorrichtung 10 dargestellt, wobei Figur 3 die Betätigung über den Steuerkolben 13 zeigt. Die Betätigung über den Notlösestößel 14 ist in Figur 4 gezeigt.

Die Sperrklinken 11, 12 sind als Winkelhebel mit jeweils zwei Hebelarmen 11a, 11c; 12a, 12c ausgebildet und jeweils um eine Schwenkachse 11e, 12e verschwenkbar im Gehäuse 1a angeordnet. Dabei umgreifen die Sperrklinken 11, 12 die Verzahnung 8 der Gewindemutter 7 um circa 180° (Figur 3-4). Die Schwenkachsen 11e, 12e verlaufen parallel zueinander und parallel zu der Kolbenachse 3.

Die Sperrklinken 11, 12 umfassen jeweils einen ersten Hebelarm 11a, 12a mit einem Antriebsende 11b, 12b und einen zweiten Hebelarm 11c, 12c mit einem Klinkenende 11d, 12d. Die Klinkenenden 11d, 12d wirken jeweils gegenüberliegend mit Zähnen der Verzahnung 8 der Gewindemutter 7 dergestalt zusammen, dass sie in dem Arretierungszustand der Verriegelungsvorrichtung 10 mit den zugehörigen Zähnen einen Formschluss wie z.B. bei einem Gesperre bilden. Die Gewindemutter 7 ist dabei mit ihrer Verzahnung 8 ein verzahntes Sperrrad, und die Klinkenenden 11d, 12d der Sperrklinken 11, 12 die jeweiligen Klinken eines solchen Gesperres.

Hier ist die Verzahnung 8 so ausgebildet, dass jeder Zahn eine radiale Flanke und eine geneigte Flanke in Bezug auf die Kolbenachse 3 aufweist. In dem Arretierungszustand der Verriegelungsvorrichtung 10 stehen die jeweiligen radialen Flanken mit radialen Flanken der Klinkenenden 11d, 12d in Kontakt.

Dabei ist ein Klinkenende 11d drückend und das andere Klinkenende 12d ziehend ausgeführt. Dies ist in den Figuren 3-4 zu erkennen. Mit anderen Worten, wenn eine Drehung der Gewindemutter 7 im Gegenuhrzeigersinn um die Kolbenachse 3 in dem Arretierungszustand der Verriegelungsvorrichtung 10 blockiert ist, steht eine radiale Flanke der Verzahnung 8 mit einer radialen Flanke des Klinkenendes 12d so in Kontakt, dass eine Zugkraft auf den zweiten Hebelarm 12c der zweien Sperrklinke 12 übertragen wird. Diese Zugkraft wird über die Lagerung der Schwenkachse 12e der zweiten Sperrklinke 12 in dem Gehäuse 1a in dieses eingeleitet. Somit wirkt das Klinkenende 12d der zweiten Sperrklinke 12 als ein ziehendes Klinkenende 12d.

Auf der radial gegenüberliegenden Seite der Gewindemutter 7 steht auch eine radiale Flanke der Verzahnung 8 mit einer radialen Flanke des Klinkenendes 11d in Kontakt, wobei aber eine Druckkraft von der Verzahnung 8 auf das Klinkenende 11d und den zweiten Hebelarm 11c der ersten Sperrklinke 11 übertragen wird. Diese Druckkraft wird wie bei der zweiten Sperrklinke 12 über die Lagerung der Schwenkachse 11e der ersten Sperrklinke 11 in dem Gehäuse 1a in dieses eingeleitet. Das Klinkenende 11d der ersten Sperrklinke 11 wirkt auf diese Weise als ein drückendes Klinkenende 11d.

Die Klinkenenden 11d, 12d sind um eine halbe Zahnteilung in Bezug auf die Verzahnung 8 der Gewindemutter 7 versetzt zueinander angeordnet und können unabhängig von einander in die Verzahnung 8 einfallen, d.h. mit dieser in Eingriff und entsprechend außer Eingriff kommen. Das heißt, im Arretierungszustand unter Last ist immer nur eine der beiden Klinken in Kontakt mit der radialen Flanke eines Zahnes der Verzahnung 8. Welche die tragende Klinke ist, hängt davon ab wie weit sich die Mutter 7 mit der Verzahnung 8 dreht, was wiederum direkt vom Kolbenhub des Betriebskolbens abhängig ist.

Die Sperrelemente in Form der Klinkenenden 11d, 12d sind jeweils um eine 1/n Zahnteilung der Verzahnung 8 versetzt zueinander angeordnet, wobei n die Anzahl der Sperrelemente ist. Dadurch kann sich das Zahnrad, d.h. die Verzahnung 8 mit der Gewindemutter 7, maximal um eine 1/n Zahnteilung zurückdrehen, wodurch der Kraftverlust um den Faktor 1/n reduziert wird. Zudem wird die Lastspielzahl der einzelnen Zähne der Verzahnung 8 bzw. der Sperrelemente d.h. Klinkenenden 11d, 12d reduziert, wodurch die Bauteile kompakter ausgelegt werden können.

In dem Arretierungszustand der Verriegelungsvorrichtung 10 sind die Sperrklinken 11, 12jeweils mittels einer Feder 15a, 16a in Eingriff mit der Verzahnung 8 der Gewindemutter 7 gedrückt. Die Federn 15a, 16a sind jeweils Druckfedern und in einem Federhalter 15, 16 in dem Gehäuse 1a gehalten und stehen jeweils mit dem Klinkenende 11d, 12d der Sperrklinken 11, 12 in Kontakt. Dabei wirkt die Federkraft der Feder 15a auf den zweiten Hebelarm 11c der ersten Sperrklinke 11 derart ein, dass die erste Sperrklinke 11 um ihre Schwenkachse 11e im Uhrzeigersinn (Figur 3-4) verschwenkt wird und das Klinkenende 11d in Eingriff mit der Verzahnung 8 der Gewindemutter kommt. In ähnlicher Weise wirkt die Federkraft der Feder 16a auf den zweiten Hebelarm 12c der zweiten Sperrklinke 12 derart ein, dass die zweite Sperrklinke 12 um ihre Schwenkachse 12e im Gegenuhrzeigersinn (Figur 3-4) verschwenkt wird und das Klinkenende 12d auch in Eingriff mit der Verzahnung 8 der Gewindemutter kommt.

Auf diese Weise wird der Arretierungszustand automatisch eingenommen, wenn keine Betätigung der Sperrklinken 11, 12 durch den Steuerkolben 13 oder/und den Notlösestößel 14 vorliegt.

Der Steuerkolben 13 und der Notlösestößel 14 sind in einem Gehäuseabschnitt 1b verstellbar bzw. verschiebbar angeordnet und stehen mit den Sperrklinken 11, 12 in Zusammenwirkung.

Der Steuerkolben 13 weist eine Steuerachse 13a in seiner Längsrichtung, einen Antriebsabschnitt 13b, einen zylindrischen Körper 13c, ein Abtriebsende 13d und eine Feder 13e auf. Der Antriebsabschnitt 13b ist als ein zylindrischer Kolben ausgebildet und in einem Kolbenraum KR in dem Gehäuseabschnitt 1b angeordnet und geführt. Der Kolbenraum KR mündet in einen Steuerdruckraum SR, welcher mit einem Steuerdruckanschluss ST kommuniziert und durch ein Anschlagelement AS verschlossen ist. Eine freie Stirnfläche des Antriebsabschnitts 13b weist in den Steuerdruckraum SR.

An dem anderen Ende des Antriebsabschnitts 13b ist der zylindrische Körper 13c angebracht, dessen freies Ende das Abtriebsende 13d bildet. Der Körper 13c ist zudem im Gehäuse 1b geführt. Die Feder 13e ist eine Druckfeder und umgibt den Körper 13c. Der Steuerkolben 13 ist mittels Druckmedium, z.B. Druckluft, mit welchem der Steuerdruckraum SR beaufschlagt wird, gegen die Kraft der Feder 13e, die sich am Gehäuse 1b abstützt, längs der Steuerachse 13a aus einer Ruheposition in eine Löseposition verstellbar. In der Ruheposition steht die freie Fläche des Antriebsabschnitts 13b mit dem Anschlagelement AS in Kontakt, welches die Ruheposition des Steuerkolbens 13 festlegt.

In dem hier beschriebenen ersten Ausführungsbeispiel ist der Notlösestößel 14 zweiteilig ausgeführt und umfasst den Notlösestößel 14 und einen Notlösebetätiger 14'.

Der Notlösestößel 14 und der Notlösebetätiger 14' weisen eine gemeinsame Notlöseachse 14a in ihrer Längsrichtung auf. Der Notlösestößel 14 umfasst weiterhin ein Betätigungsende 14b, einen zylindrischen Körper 14c, ein Abtriebsende 14d und eine Feder 14e auf. Das Betätigungsende 14b wird in einen Aufnahmeraum AN in dem Gehäuseabschnitt 1b geführt. Eine freie Stirnfläche des Antriebsabschnitts 14b weist zu einer Außenöffnung des Aufnahmeraums AN und ist hier mit einem Schlitz als Betätigungsabschnitt 14f für ein Werkzeug, z.B. einen Schraubendreher, versehen.

An dem anderen Ende des Betätigungsabschnitts 14b ist der zylindrische Körper 14c angebracht, dessen freies Ende das Abtriebsende 14d bildet. Der Körper 14c ist zudem im Gehäuse 1b geführt. Die Feder 14e ist eine Druckfeder und umgibt den Körper 14c. Der Notlösestößel 14 ist mittels eines Werkzeugs, gegen die Kraft der Feder 14e, die sich am Gehäuse 1b abstützt, längs der Notlöseachse 14a aus einer Ruheposition in eine Notlöseposition verstellbar, insbesondere axial verschiebbar.

In dem in Figur 2 gezeigten Beispiel ist der Notlösebetätiger 14' nicht geschnitten dargestellt und umfasst einen Körper 14'c und ein Betätigungsende 14'b, welches aus dem Gehäuse 1b hervorsteht. Das andere Ende des Körpers 14'c steht in Kontakt mit dem Betätigungsende 14b des Notlösestößels 14. Der Notlösebetätiger 14' ist in dem Gehäuse 1 axial verschiebbar geführt, wobei sein Hub axial begrenzt ist.

Der Notlösebetätiger 14' wirkt von außerhalb des Gehäuses auf den Notlösestößel 14, wenn das Betätigungsende 14'b des Notlösebetätigers 14' mit einem geeigneten Werkzeug betätigt (gedrückt) wird.

In Figur 4 ist nur der Notlösestößel 14 ohne Notlösebetätiger 14' dargestellt.

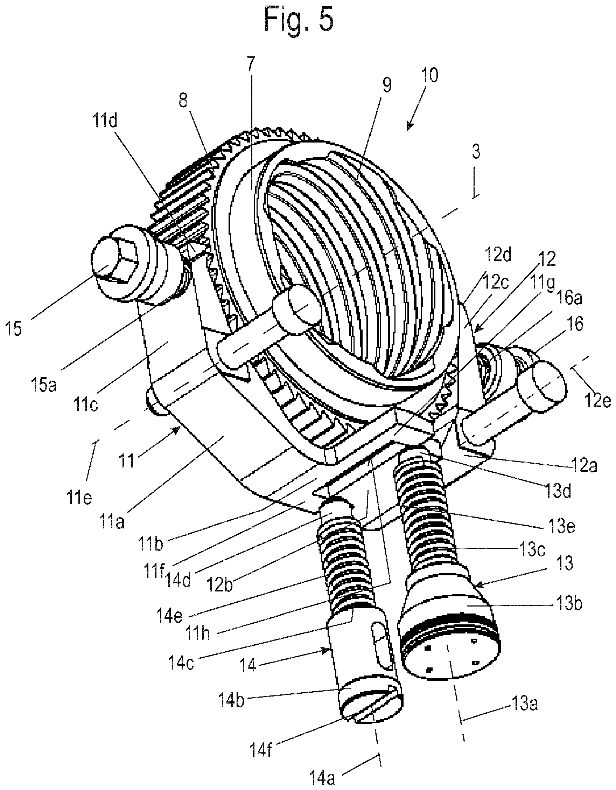

**Figur 5** zeigt eine schematische Perspektivansicht der Verriegelungsvorrichtung 10 des ersten Ausführungsbeispiels nach Figur 1-2.

Der Steuerkolben 13 und der Notlösestößel 14 sind so nebeneinander angeordnet, dass ihre Längsachsen, d.h. die Steuerachse 13a und die Notlöseachse 14a parallel zueinander und rechtwinklig zu der Kolbenachse 3 verlaufen.

Sowohl das Abtriebsende 13d des Steuerkolbens 13 als auch das Abtriebsende 14d des Notlösestößels 14 wirken in der Löseposition des Steuerkolbens 13 als auch in der Notlöseposition des Notlösestößels 14 jeweils mit dem Antriebsende 11b der ersten Sperrklinke 11 und dem Antriebsende 12b der zweiten Sperrklinke 12 zusammen. Dazu sind die Antriebsenden 11b und 12b hier unterschiedlich ausgebildet, was in Figur 5 deutlich zu erkennen ist.

Das Antriebsende 11b der ersten Sperrklinke 11 ist gabelförmig mit zwei Antriebsabschnitte 11f als Zinken und einem Abstand zwischen den Antriebsabschnitten 11f ausgebildet. Zwischen den Antriebsabschnitten 11f in ist das Antriebsende 12b der zweiten Sperrklinke 12 plattenförmig ausgebildet und zwischen den Antriebsabschnitten 11f angeordnet. Das Antriebsende 11b mit den Antriebsabschnitten 11f der ersten Sperrklinke 11 und das Antriebsende 12b der zweiten Sperrklinke 12 und somit die beiden Sperrklinken 11, 12 sind unabhängig voneinander bewegbar.

Das Abtriebsende 13d des Steuerkolbens 13 und das Abtriebsende 14d des Notlösestößels 14 wirken jeweils mit einem Antriebsabschnitt 11f der ersten Sperrklinke 11 und mit dem Antriebsabschnitt 12b der zweiten Sperrklinke 12 zusammen, wobei sie in den jeweiligen Lösepositionen jeweils mit einem Antriebsabschnitt 11f der ersten Sperrklinke 11 und mit dem Antriebsabschnitt 12b der zweiten Sperrklinke 12 in Kontakt stehen und die Sperrklinken 11, 12 um die jeweilige Schwenkachse 11e, 12e außer Eingriff mit der Verzahnung 8 der Gewindemutter 7 bringen.

Wenn die Betriebsbremse eingelegt wurde und sich die Verriegelungsvorrichtung 10 in dem Arretierungszustand befindet, d.h. die Sperrklinken 11, 12 mit der Verzahnung 8 der Gewindemutter 7 in Eingriff stehen, ist eine Feststellbremse oder Parkbremse in Funktion. Der Arretierungszustand der Verriegelungsvorrichtung 10 kann dann durch Beaufschlagen des Steuerkolbens 13 mit Steuerdruck in den Lösezustand verstellt werden. Dabei wird der Steuerkolben 13 aus seiner Ruheposition in seine Löseposition verstellt, wobei er die Sperrklinken 11, 12 mit seinem Abtriebsende 13d betätigt. Dann ist der Bremszylinder 1 für Betriebsbremsungen bereit.

Wird eine Notlösefunktion benötigt, wenn z.B. kein Steuerdruck für den Steuerkolben 13 vorhanden ist oder bei Verlust von Betätigungsenergie, kann der Notlösestößel 14 mittels Werkzeug verstellt werden. Dabei wird der Notlösestößel 14 aus seiner Ruheposition in seine Löseposition verstellt, wobei er die Sperrklinken 11, 12 mit seinem Abtriebsende 14d betätigt.

Zum Einnehmen des Arretierungszustands wird der Steuerkolben 13 nicht mehr mit Steuerdruck beaufschlagt. Dann wird der Steuerkolben 13 durch die Federkraft seiner Feder 13e aus seiner Löseposition in seine Ruheposition verstellt, wobei die Sperrklinken 11, 12 durch deren Federn 15a, 16a wieder in Eingriff mit der Verzahnung 8 der Gewindemutter 7 verstellt werden. Im Falle des Notlösestößels 14 wird dieser durch die Feder 14e aus seiner Löseposition in seine Ruheposition zurückgestellt und in seiner Ruheposition gehalten. Die Sperrklinken 11, 12 werden auch dabei wie oben beschrieben in Eingriff mit der Verzahnung 8 der Gewindemutter 7 gebracht.

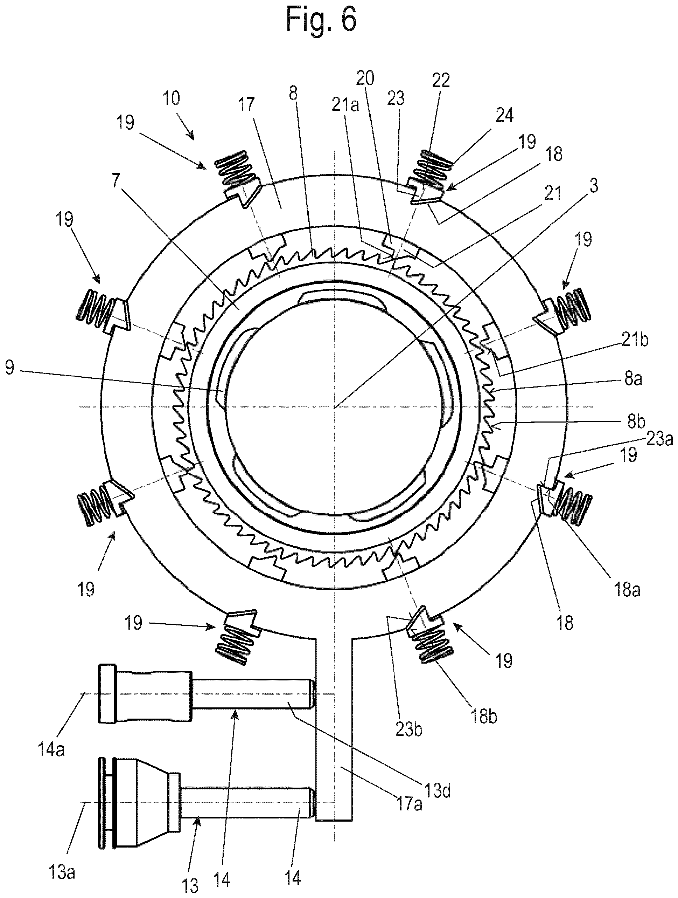

**Figur 6** stellt eine schematische Ansicht einer Verriegelungsvorrichtung 10 eines zweiten Ausführungsbeispiels des erfindungsgemäßen Bremszylinders 1 nach Figur 1 dar.

In dem zweiten Ausführungsbeispiel ist eine Realisierungsmöglichkeit der gleichzeitigen Betätigung von mehreren Schiebern 19 mit einem Betätigungselement, das als Betätigungsring 17 ausgebildet ist, gezeigt.

In der dargestellten Ausführung weist die Verriegelungsvorrichtung 10 den Steuerkolben 13, den Notlösestößel 14, einen Betätigungsring 17 und acht Schieber 19 auf.

Der Betätigungsring 17 ist um die Kolbenachse 3 verschwenkbar und weist einen Betätigungsabschnitt 17a auf, welcher mit dem Steuerkolben 13 und dem Notlösestößel 14 in Kontakt steht.

Der Betätigungsring 17 ist zudem mit Steuerausnehmungen 18 versehen, welche umlaufend in seinen Außendurchmesser eingeformt sind. Die Steuerausnehmungen weisen jeweils eine Radialflanke 18a und eine geneigte Flanke 18b auf.

Jeder Schieber 19 umfasst einen Sperrelement 20 mit einem Sperrkantenabschnitt 21, einen Steuerabschnitt 22 mit einem Steuerflächenabschnitt 23 und eine Feder 24.

Die Schieber 19 sind in Nuten in dem Gehäuse 1a verschiebbar geführt angeordnet und werden über die Federn 24, welche sich am Gehäuse 1a abstützen, mit ihren Sperrklinken 21 radial gegen die Verzahnung 8 der Gewindemutter 7 gedrückt.

Die Steuerabschnitte 22 der Schieber 19 weisen an Ihren Außenseiten die Steuerflächenabschnitte 23 mit radialen Flächen von Radialflanken 23a und geneigten Flächen von Schrägflanken 23b auf. Diese geneigten Flächen stehen jeweils mit einer Steuerausnehmung 18 des Betätigungsrings 17 in Eingriff. In der gezeigten Stellung können die Sperrkantenabschnitte 21 der Schieber 19 unabhängig voneinander in die Verzahnung 8 der Gewindemutter 7 einfallen und die Gewindemutter 7 verriegeln, indem die Radialflanken 8a und Schrägflanken 8b der Verzahnung 8 formschlüssig mit den Radialflanken 21a und Schrägflanken 21b der Sperrkantenabschnitte 21 in Eingriff stehen.

Durch Drehung des Betätigungsringes 17, hier im Gegenuhrzeigersinn, um die Kolbenachse 3 werden die Sperrkantenabschnitte 21 gleichzeitig durch das Zusammenwirken der geneigten Flächen der Schrägflanken 23b der Steuerflächenabschnitte 23 und der Schrägflanken 18b des Betätigungsrings 17 außer Eingriff mit der Verzahnung 8 gebracht. Der Betätigungsring 17 wird von dem Steuerkolben 13 bzw. Notlösestößel 14 betätigt.

Auch hier kann durch Betätigung des Notlösestößels manuell oder/und durch ein Werkzeug bzw. mittels des Notlösebetätigers 14' der Arretierungszustand der Verriegelungsvorrichtung 10 in den Lösezustand verstellt werden.

Die Erfindung ist durch das oben angegebene Ausführungsbeispiel nicht eingeschränkt, sondern im Rahmen der Ansprüche modifizierbar.

So ist z.B. denkbar, dass der Steuerkolben 13 durch eine Stelleinrichtung verstellbar ist. Eine solche Stelleinrichtung kann z.B. ein elektrischer, elektromechanischer, pneumatischer, hydraulischer Aktuator sein.

Die Federn 15a, 16a können mittels der Halterungen 15, 16 einstellbar sein und somit den Eingriff der Klinkenenden 11d, 12d mit der Verzahnung 8 beeinflussen.

Eine Einstellung der Ruheposition des Steuerkolbens 13 kann mit einem verstellbaren Anschlagelement AS ermöglicht sein.

### Bezugszeichenliste

- 1: Bremszylinder
- 1a: Gehäuse
- 1b: Gehäuseabschnitt
- 2: Betriebsbremskolben
- 3: Kolbenachse
- 4: Bewegungsrichtung
- 5: Kolbenrohr
- 6: Gewindeabschnitt
- 7: Gewindemutter
- 8: Verzahnung
- 8a: Radialflanke
- 8b: Schrägflanke
- 9: Gewinde
- 10: Verriegelungsvorrichtung
- 11, 12: Sperrklinke
- 11a, 12a: Hebelarm
- 11b, 12b: Antriebsende
- 11c, 12c: Hebelarm
- 11d, 12d: Klinkenende
- 11e, 12e: Schwenkachse
- 11f, 11g: Antriebsabschnitt
- 13: Steuerkolben
- 13a: Steuerachse
- 13b: Antriebsabschnitt
- 13c: Körper
- 13d: Abtriebsende
- 13e: Feder
- 14: Notlösestößel
- 14': Notlösebetätiger
- 14a: Notlöseachse
- 14b, 14'b: Betätigungsende
- 14c, 14'c: Körper
- 14d: Abtriebsende
- 14e: Feder
- 14f: Betätigungsabschnitt
- 15, 16: Federhalter
- 15a, 16a: Feder
- 17: Betätigungsring
- 17a: Betätigungsabschnitt
- 18: Steuerausnehmung
- 18a: Radialflanke
- 18b: Schrägflanke
- 19: Schieber
- 20: Sperrelement
- 21: Sperrkantenabschnitt
- 21a: Radialflanke
- 21b: Schrägflanke
- 22: Steuerabschnitt
- 23: Steuerflächenabschnitt
- 23a: Radialflanke
- 23b: Schrägflanke

- AN: Aufnahmeraum
- AS: Anschlagelement
- DA: Druckanschluss
- DR: Druckraum
- GR: Gehäuseinnenraum
- KR: Kolbenraum
- SR: Steuerdruckraum
- ST: Steuerdruckanschluss

## Patentansprüche

1. Bremszylinder (1) mit einer Verriegelungsvorrichtung (10) zur mechanischen Bremskraftverriegelung, insbesondere für Schienenfahrzeuge, und mit einem innerhalb eines Gehäuses (1) axial bewegbaren Betriebsbremskolben (2), der durch Beaufschlagung mit einem Druckmedium bewegbar und mit einem Kolbenrohr (5) gekoppelt ist, wobei das Kolbenrohr (5) mit einem nicht selbsthemmenden Gewinde (9), das in Eingriff mit einer in dem Gehäuse (1) drehbar gelagerten Gewindemutter (7) steht, ausgebildet ist, wobei die Verriegelungsvorrichtung (10) mit einer Verzahnung (8) der Gewindemutter (7) zusammenwirkt,
wobei die Verriegelungsvorrichtung (10) mindestens zwei Sperrelemente (11, 12, 20), einen Steuerkolben (13) und einen Notlösestößel (14) umfasst,
**dadurch gekennzeichnet, dass** mindestens zwei als Sperrklinken (11, 12) ausgeführte Sperrelemente in Bezug auf eine Kolbenachse (3), zu welcher die Gewindemutter (7) koaxial angeordnet ist, an der Verzahnung (8) der Gewindemutter (7) radial gegenüberliegend angeordnet sind, wobei die mindestens zwei Sperrklinken (11, 12) gleichzeitig durch sowohl den einen Steuerkolben (13) als auch durch den einen Notlösestößel (14) betätigbar sind,
wobei die Verriegelungsvorrichtung (10) aus einem Arretierungszustand, in welchem die mindestens zwei Sperrklinken (11, 12) durch einen Eingriff mit der Verzahnung (8) der Gewindemutter (7) deren Verdrehung um die Kolbenachse (3) blockieren, wobei die mindestens zwei Sperrklinken (11, 12) jeweils mittels einer Feder (15a, 16a) in Eingriff mit der Verzahnung (8) der Gewindemutter (7) gedrückt sind, in einen Lösezustand, in welchem die Sperrklinken (11, 12) außer Eingriff mit der Verzahnung (8) der Gewindemutter (7) stehen und die Gewindemutter (7) in ihrer Verdrehung nicht blockieren, mittels des Steuerkolbens (13) und/oder des Notlösestößels (14) verstellbar ist, wobei die Verriegelungsvorrichtung (10) durch Beaufschlagen des Steuerkolbens (13) mit Steuerdruck in den Lösezustand verstellt ist, oder wobei der Notlösestößel (14) mittels Werkzeug oder/und manuell aus einer Ruheposition in eine Löseposition verstellt ist und die eine oder mehreren Sperrklinken (11, 12) betätigt, wobei die Verriegelungsvorrichtung (10) aus dem Lösezustand in den Arretierungszustand mittels des Steuerkolbens (13) verstellbar ist, wenn der Steuerkolben (13) nach Beaufschlagung mit Druck anschließend wieder entlüftet wird, oder im Falle des Notlösestößels (14) dieser aus seiner Löseposition in seine Ruheposition zurückgestellt ist.

2. Bremszylinder (1) nach einem der vorhergehenden Ansprüche, **dadurch gekennzeichnet, dass** die mindestens zwei Sperrklinken (11, 12) als Winkelhebel mit jeweils zwei Hebelarmen (11a, 11c; 12a, 12c) ausgebildet und jeweils um eine Schwenkachse (11e, 12e) verschwenkbar in dem Gehäuse (1a) angeordnet sind.

3. Bremszylinder (1) nach Anspruch 2, **dadurch gekennzeichnet, dass** die Schwenkachsen (11e, 12e) der mindestens zwei Sperrklinken (11, 12) parallel zu der Kolbenachse (3) angeordnet sind.

4. Bremszylinder (1) nach einem der vorhergehenden Ansprüche, **dadurch gekennzeichnet, dass** die mindestens zwei Sperrklinken (11, 12) durch die Federkraft von Federn (15a, 16a) in dem Verriegelungszustand der Verriegelungsvorrichtung (10) in Eingriff mit der Verzahnung (8) der Gewindemutter (7) stehen.

5. Bremszylinder (1) nach einem der vorhergehenden Ansprüche, **dadurch gekennzeichnet, dass** die mindestens zwei Sperrklinken (11, 12) der Verriegelungsvorrichtung (10) unabhängig voneinander bewegbar sind.

6. Bremszylinder (1) nach einem der vorhergehenden Ansprüche, **dadurch gekennzeichnet, dass** ein Klinkenende (11d) einer der mindestens zwei Sperrklinken (11, 12) in Bezug auf die Verzahnung (8) der Gewindemutter (7) drückend und das andere Klinkenende (12d) einer der mindestens zwei Sperrklinken (11, 12) in Bezug auf die Verzahnung (8) der Gewindemutter (7) ziehend ausgeführt ist.

7. Bremszylinder (1) nach einem der vorhergehenden Ansprüche, **dadurch gekennzeichnet, dass** die Klinkenenden (11d, 12d) der mindestens zwei Sperrklinken (11, 12) um eine 1/n Zahnteilung in Bezug auf die Verzahnung (8) der Gewindemutter (7) versetzt zueinander angeordnet, wobei n die Anzahl der Sperrklinken (11, 12) ist.

8. Bremszylinder (1) nach einem der vorhergehenden Ansprüche, **dadurch gekennzeichnet, dass** ein Antriebsende (11b) der ersten Sperrklinke (11) gabelförmig mit zwei Antriebsabschnitten (11f) als Zinken und einem Abstand zwischen den Antriebsabschnitten (11f) ausgebildet ist, wobei ein plattenförmiges Antriebsende (12b) der zweiten Sperrklinke (12) zwischen den als Zinken gebildeten Antriebsabschnitten (11f) angeordnet ist.

9. Bremszylinder (1) nach Anspruch 1, **dadurch gekennzeichnet, dass** die Verriegelungsvorrichtung (10) weiterhin mindestens zwei in dem Gehäuse (1a) geführte Schieber (19) mit jeweils einem Sperrelement (20) mit einem Sperrkantenabschnitt (21) und jeweils einem Steuerabschnitt (22) mit einem Steuerflächenabschnitt (23) und einen Betätigungsring (17) aufweist, wobei der Betätigungsring (17) ist um eine Kolbenachse (3) verschwenkbar ist und einen Betätigungsabschnitt (17a) aufweist, welcher mit dem Steuerkolben (13) und dem Notlösestößel (14) in Kontakt steht.

10. Bremszylinder (1) nach Anspruch 9, **dadurch gekennzeichnet, dass** der Betätigungsring (17) Steuerausnehmungen (18) aufweist, welche umlaufend in seinen Außendurchmesser eingeformt sind und mit den Steuerabschnitten (22) der Schieber (19) in Kontakt stehen.

11. Bremszylinder (1) nach Anspruch 10, **dadurch gekennzeichnet, dass** die Schieber (19) in Nuten in dem Gehäuse (1a) verschiebbar geführt angeordnet und über Federn (24) mit den Sperrkantenabschnitten (21) radial gegen die Verzahnung (8) der Gewindemutter (7) gedrückt sind.

12. Bremszylinder (1) nach einem der vorhergehenden Ansprüche, **dadurch gekennzeichnet, dass** der Steuerkolben (13) mit einem Druckmittel beaufschlagbar ist, und dass der Notlösestößel manuell oder/und mit einem Werkzeug verstellbar ist.

## Claims

1. A brake cylinder (1) having a locking device (10) for mechanical brake force locking, in particular for rail vehicles, and having a service brake piston (2) that can be moved axially inside a housing (1), can be moved by the application of a pressure medium and is coupled to a piston tube (5), this piston tube (5) being designed with a non-self-locking thread (9) that is in mesh with a threaded nut (7) that is mounted rotatably in the housing (1), the locking device (10) cooperating with the toothing (8) of the threaded nut (7),
the locking device (10) comprising at least two locking elements (11, 12, 20), a control piston (13) and an emergency release tappet (14),
**characterised in that** at least two locking elements in the form of locking pawls (11, 12) are arranged on the toothing of the threaded nut (7) and radially opposite one another in relation to a piston axis (3) with which the threaded nut (7) is itself arranged coaxially, it being possible, by means of the control piston (13) and/or the emergency release tappet (14), to actuate the at least two locking pawls (11, 12) simultaneously by means of both the one control piston (13) and the one emergency-release tappet (14),
it being possible to shift the locking device (10) from a locked position, in which the at least two locking pawls (11, 12) block the rotation of the threaded nut (7) about the piston axis (3) by meshing with the toothing (8) of the threaded nut (7), the at least two locking pawls (11, 12) each being pressed into mesh with the toothing (8) of the threaded nut (7) by means of a spring (15a, 16a), into a release position in which the locking pawls (11, 12) are out of mesh with the toothing (8) of the threaded nut (7) and do not block the rotation of the threaded nut (7), the locking device (10) being shifted into the release position by the application of control pressure to the control piston (13) or the emergency-release tappet (14) being shifted out of a standby position into a release position by means of a tool and/or manually and the one or more locking pawls (11, 12) being actuated, it being possible to shift the locking device (10) from the release position into the locked position by means of the control piston (13) when, following the application of pressure, the control piston (13) is subsequently deaerated again or, in the case of the emergency-release tappet (14), it is returned from its release position to its standby position.

2. A brake cylinder (1) according to any one of the preceding claims,
**characterised in that** the at least two locking pawls (11, 12) take the form of angle levers, each having two lever arms (11a, 11c; 12a, 12c), and are arranged in the housing (1a) such that they can be pivoted about a pivot axis (11e, 12e).

3. A brake cylinder (1) according to claim 2, **characterised in that** the pivot axes (11e, 12e) of the at least two locking pawls (11, 12) are arranged parallel to the piston axis (3),

4. A brake cylinder (1) according to any one of the preceding claims,
**characterised in that,** when the locking device (10) is in the locked position, the at least two locking pawls (11, 12) are in mesh with the toothing (8) of the threaded nut (7) due to the spring force of the springs (15a, 16a).

5. A brake cylinder (1) according to any one of the preceding claims,
**characterised in that** the at least two locking pawls (11, 12) of the locking device (10) can be moved independently of one another.

6. A brake cylinder (1) according to any one of the preceding claims,
**characterised in that** one locking pawl end (11d) of one of the at least two locking pawls (11, 12) is designed to press against the toothing (8) of the threaded nut (7) and the other locking pawl end (12d) of one of the at least two locking pawls (11, 12) is designed to pull against the toothing (8) of the threaded nut (7).

7. A brake cylinder (1) according to any one of the preceding claims,
**characterised in that** the locking pawl ends (11d, 12d) of the at least two locking pawls (11, 12) are arranged offset in relation to one another by a tooth pitch of 1/n in relation to the toothing (8) of the threaded nut (7), n being the number of locking pawls (11, 12).

8. A brake cylinder (1) according to any one of the preceding claims,
**characterised in that** a drive end (11b) of the first locking pawl (11) is designed to be fork-shaped with two drive portions (11f) as the prongs and a gap between the drive portions (11f), a plate-shaped drive end (12b) of the second locking pawl (12) being arranged between the drive portions (11f) that form the prongs.

9. A brake cylinder (1) according to claim 1, **characterised in that** the locking device (10) further has at least two sliders (19) mounted in the housing (1a), each of which has a locking element (20) with a locking stop portion (21), a control portion (22) with a control face portion (23) and an actuating ring (17), the actuating ring (17) being pivotable about a piston axis (3) and having an actuating portion (17a) that is in contact with the control piston (13) and the emergency release tappet (14).

10. A brake cylinder (1) according to claim 9, **characterised in that** the actuating ring (17) has control recesses (18) that are integrally formed circumferentially in its outer diameter and are in contact with the control portions (22) of the sliders (19).

11. A brake cylinder (1) according to claim 10, **characterised in that** the sliders (19) are arranged such that they can be displaced in a guided manner in grooves in the housing (1a) and can be pushed radially against the toothing (8) of the threaded nut (7) by the locking stop portions (21) via springs.

12. A brake cylinder (1) according to any of the preceding claims, **characterised in that** it is possible to apply a pressure medium to the control piston (13) and to adjust the emergency release tappet manually and/or by means of a tool.

## Revendications

1. Cylindre (1) de frein comprenant un dispositif (10) de verrouillage pour le verrouillage mécanique de la force de freinage, en particulier pour des véhicules ferroviaires, et comprenant un piston (2) de frein de service, qui peut se déplacer axialement dans une enveloppe (1), qui peut être déplacé par alimentation en un fluide sous pression et qui est accouplé à un tube (5) de piston, dans lequel le tube (5) de piston est constitué en ayant un filetage (9) non autobloquant, qui est en prise avec un écrou (7) fileté, monté tournant dans l'enveloppe (1), dans lequel le dispositif (10) de verrouillage coopère avec une denture (8) de l'écrou (7) fileté,
dans lequel le dispositif (10) de verrouillage comprend au moins deux éléments (11, 12, 20) d'arrêt, un piston (13) de commande et un poussoir (14) de desserrage d'urgence,
**caractérisé en ce qu'**au moins deux éléments d'arrêt réalisés en cliquets (11, 12) d'arrêt sont disposés en étant opposés radialement sur la denture (8) de l'écrou (7) fileté par rapport à un axe (3) de piston, par rapport auquel l'écrou (7) fileté est disposé coaxialement, dans lequel les au moins deux cliquets (11, 12) d'arrêt peuvent être actionnés en même temps tant par le un piston (13) de commande qu'également par le un poussoir (14) de desserrage d'urgence,
dans lequel le dispositif (10) de verrouillage peut être déplacé au moyen du piston (13) de commande et/ou du poussoir (14) de desserrage, d'un état d'arrêt, dans lequel les au moins deux cliquets (11, 12) bloquent, en se prenant avec la denture (8) de l'écrou (7) fileté, sa rotation autour de l'axe (3) du piston, dans lequel les au moins deux cliquets (11, 12) d'arrêt sont, respectivement au moyen d'un ressort (15a, 16a), repoussés en prise avec la denture (8) de l'écrou (7) fileté, dans un état de desserrage, dans lequel les cliquets (11, 12) d'arrêt sont hors de prise avec la denture (8) de l'écrou (7) fileté et ne bloquent pas l'écrou (7) fileté dans sa rotation, dans lequel le dispositif (10) de verrouillage est mis dans l'état de desserrage, par alimentation du piston (13) de commande en une pression de commande, ou dans lequel le poussoir (14) de desserrage d'urgence est mis d'une position de repos à une position de desserrage, au moyen d'un outil ou/et manuellement et actionne le un ou les plusieurs cliquets (11, 12) d'arrêt, dans lequel le dispositif (10) de verrouillage peut passer de l'état de desserrage à l'état d'arrêt au moyen du piston (13) de commande, si le piston (13) de commande, après alimentation en pression, est ensuite remis à l'atmosphère, ou, dans le cas du poussoir (14) de desserrage d'urgence, celui-ci revient de sa position de desserrage à sa position de repos.

2. Cylindre (1) de frein suivant l'une des revendications précédentes, **caractérisé en ce que** les au moins deux cliquets (11, 12) d'arrêt sont constitués sous la forme de leviers coudés ayant chacun deux bras (11a, 11c ; 12a, 12c) de levier et sont montés dans l'enveloppe (1a) pivotants respectivement autour d'un axe (11e, 12e) de pivotement.

3. Cylindre (1) de frein suivant la revendication 2, **caractérisé en ce que** les axes (11e, 12e) de pivotement des au moins deux cliquets (11, 12) d'arrêt sont disposés parallèlement à l'axe (3) du piston.

4. Cylindre (1) de frein suivant l'une des revendications précédentes, **caractérisé en ce que** les au moins deux cliquets (11, 12) d'arrêt sont, par la force de ressorts (15a, 16a), dans l'état de verrouillage du dispositif (10) de verrouillage, en prise avec la denture (8) de l'écrou (7) fileté.

5. Cylindre (1) de frein suivant l'une des revendications précédentes, **caractérisé en ce que** les au moins deux cliquets (11, 12) d'arrêt du dispositif (10) de verrouillage peuvent être déplacés indépendamment l'un de l'autre.

6. Cylindre (1) de frein suivant l'une des revendications précédentes, **caractérisé en ce qu'**une extrémité (11d) de cliquet de l'un des au moins deux cliquets (11, 12) d'arrêt est réalisée à poussée par rapport à la denture (8) de l'écrou (7) fileté, et l'autre extrémité (12d) de cliquet de l'un des au moins deux cliquets (11, 12) d'arrêt est réalisée à traction par rapport à la denture (8) de l'écrou (7) fileté.

7. Cylindre (1) de frein suivant l'une des revendications précédentes, **caractérisé en ce que** les extrémités (11d, 12d) de cliquets des au moins deux cliquets (11, 12) d'arrêt sont décalées l'une par rapport à l'autre d'un pas de 1/n dent, par rapport à la denture (8) de l'écrou (7) fileté, n étant le nombre des cliquets (11, 12) d'arrêt.

8. Cylindre (1) de frein suivant l'une des revendications précédentes, **caractérisé en ce qu'**une extrémité (11b) d'entraînement du premier cliquet (11) d'arrêt est constitué en forme de fourche ayant deux, parties (11f) d'entraînement sous la forme de dents et avec une distance entre les parties (11f) d'entraînement, dans lequel une extrémité (12b) d'entraînement en forme de plaque du deuxième cliquet (12) d'arrêt est disposée entre les parties (11f) d'entraînement sous la forme de dent.

9. Cylindre (1) de frein suivant la revendication 1, **caractérisé en ce que** le dispositif (10) d'arrêt a en outre au moins deux coulisseaux (19) guidés dans l'enveloppe (1a), ayant chacun un élément (20) d'arrêt avec une partie (21) de bord d'arrêt et respectivement une partie (22) de commande avec une partie (23) de surface de commande et un anneau (17) d'actionnement, dans lequel l'anneau (17) d'actionnement peut pivoter autour d'un axe (3) du piston et a une partie (17a) d'actionnement, qui est en contact avec le piston (13) de commande et le poussoir (14) de desserrage d'urgence.

10. Cylindre (1) de frein suivant la revendication 9, **caractérisé en ce que** l'anneau (17) d'actionnement a des évidements (18) de commande, qui sont formés en faisant le tour dans son diamètre extérieur et qui sont en contact avec les parties (22) de commande des coulisseaux (19).

11. Cylindre (1) de frein suivant la revendication 10, **caractérisé en ce que** les coulisseaux (19) sont montés guidés à coulissement dans des rainures de l'enveloppe (1a) et sont repoussés radialement sur la denture (8) de l'écrou (7) fileté, par l'intermédiaire de ressorts (24) par les parties (21) de bord d'arrêt.

12. Cylindre (1) de frein suivant l'une des revendications précédentes, **caractérisé en ce que** le piston (13) de commande peut être alimenté en un fluide sous pression, et **en ce que** le poussoir de desserrage d'urgence peut être déplacement manuellement ou/et par un outil.
